# FASCICULE DE BREVET EUROPEEN

(11) **EP 0 440 550 B1**
(45) Date de publication et mention de la délivrance du brevet: **13.10.1993**
(21) Numéro de dépôt: 91400202.7
(22) Date de dépôt: 29.01.1991
(51) Int. Cl.: B65D 77/20

(54) **Procédé de fabrication de récipients munis d'une fermeture pelable**
Verfahren zum Herstellen von mit einem abziehbaren Verschluss versehenen Behälter
Method for manufacturing containers having a peelable closure

(30) Priorité: 02.02.1990 FR 9001251
(43) Date de publication de la demande: 07.08.1991
(73) Titulaire: ONO Société dite:, 28700 Auneau (FR)
(72) Inventeur: Flork, Jean-Louis, 28230 Epernon (FR)
(74) Mandataire: Polus, Camille

(56) Documents cités:
- EP-A- 0 220 997
- EP-A- 0 262 652
- US-A- 3 278 109

## Description

La présente invention a pour objet un procédé de fabrication de récipients, notamment pour produits alimentaires.

L'invention concerne plus particulièrement la fabrication de récipients destinés à emballer des aliments et dans lesquels la fermeture de l'emballage est assurée par des moyens réalisés lors de la fabrication du récipient. Il s'agit notamment de récipients qui puissent être ouverts manuellement et qui sont donc de préférence munis de fermetures dites pelables (voir p.e.EP-A-0 262 652).

Ainsi la fonction fermeture doit assurer :
1) Une fermeture étanche pour toute la durée de vie de l'aliment dont les diverses sollicitations sont les suivantes :
   - transports après la phase de fermeture (ligne de conditionnement, distribution, ...);
   - stérilisation en autoclave, couramment 1h à 121°C (tenue en température, tenue de l'adhérence, ...);
   - stockage pouvant être les conditions tropicales durant 1 an (40°C/90% d'humidité relative); et
   - variations brusques de température par des chocs thermiques (passage de -18° du congélateur à + 40°C).
2) Une ouverture facile avec une force constante lors de l'utilisation.
3) Une fermeture sur une surface propre.

Pour assurer cette double fonction 1) et 2) (sans 3) de fermeture étanche et d'ouverture facile, pour un récipient en matière plastique, selon EP-A-0 262 652 (IDEMITSU) on a proposé la coextrusion d'une couche supplémentaire dans l'opercule ou dans la pièce assurant la fermeture avec une prédécoupe de forme afin de remplir les conditions suivantes :
- une fermeture étanche par soudure franche des faces en contact opercule et récipient,
- une pelabilité avec une force d'ouverture constante en entaillant cette couche supplémentaire pour assurer la pelabilité entre cette couche et la base de l'opercule ou du récipient.

Il s'agit toutefois d'une réalisation relativement onéreuse, nécessitant l'adjonction d'une couche supplémentaire sur toute la surface de la feuille lors de la réalisation de celle-ci.

Selon l'invention on a maintenant trouvé un procédé de fabrication de récipients avec adjonction de matière en vue de la fermeture du récipient mais seulement à l'endroit de celle-ci, lors de la fabrication du corps du récipient ou du scellage du récipient.

L'invention a donc pour objet un procédé de fabrication de récipients réalisés par formage d'une feuille mono- ou multicouches et munis d'une fermeture étanche pelable, le scellage du récipient étant effectué au moyen d'une matière thermosoudable, caractérisé en ce que la matière thermosoudable est injectée sur le récipient lors de son thermoformage ou de son scellage.

Ainsi l'invention propose notamment une combinaison inattendue des techniques de thermoformage et de scellage utilisées dans la réalisation des corps de récipients en matière plastique avec la technique d'injection des matières plastiques.

Dans un tel cas, la feuille mono- ou multicouches utilisée pour la réalisation des récipients tels que des barquettes, pots, etc, peut être choisie parmi les matières plastiques thermoformables habituellement utilisées dans l'industrie alimentaire ou pharmaceutique, notamment les monocouches à base de polyoléfine (p. ex. polypropylène, dénommé PP), de polystyrène ou de polyester, ou les multicouches utilisant ces mêmes produits avec adjonction d'une couche barrière à l'oxygène (par exemple les copolymères d'alcool vinylique et d'éthylène, dénommés EVOH), ces couches étant le plus souvent disposées en sandwich (par exemple PP/adhésif/EVOH/adhésif/PP). Ces feuilles ont généralement une épaisseur de 0,3 à 3 mm.

La fermeture pelable (ou opercule) peut être une feuille mono- ou multicouches habituellement utilisée dans l'industrie alimentaire ou pharmaceutique, par exemple aluminium, aluminium/polyoléfine, PET/aluminium/laque, papier plastifié ou une matière plastique mono- ou multicouche comme défini ci-dessus pour la matière du récipient.

Selon l'invention la matière thermosoudable assurant le scellage du récipient est injectée sur le récipient, notamment le rebord de celui-ci, suivant une ou plusieurs lignes continues et fermées faisant le tour du récipient et appelées ci-après joncs.

La matière du jonc sera choisie pour assurer l'endroit de la pelabilité :
- soit entre surface du récipient et le jonc,
- soit dans la matière du jonc (rupture "cohésive"),
- soit entre le jonc et l'opercule.

Cet endroit dépend du choix de la matière du jonc et du choix de la matière du couple jonc/support récipient ou opercule. Ainsi dans le cas courant où la surface du récipient est en polyoléfine, la matière thermosoudable pourra être choisie notamment parmi un polyéthylène, un polypropylène ou leurs copolymères avec l'acétate de vinyle, etc, modifiés par un acide carboxylique ou ses esters, tel qu'un acrylate ou méthacrylate, par un caoutchouc isoprène, styrènebutadiène etc, de tels polymères étant généralement appelés "adhésifs" par les fabricants, par exemple les Escor^{R} de la société Exxon, Bynel^{R} de la société Dupont de Nemours, Orevac^{R} de la société Ato, Admer^{R} de la société Mitsui et Modic^{R} de la société Mitsubishi.

La matière thermosoudable peut être injectée suivant des points mobiles ou fixes dépendant du type de machine à thermoformer.

L'injection dépend aussi de :
- la forme du jonc (section, volume),
- la forme de réception du jonc et
- le lieu du jonc sur le récipient.

L'injection couplée au thermoformage selon l'invention permet de choisir le meilleur compromis pour remplir une ou plusieurs fonctions.

La forme du jonc sera choisi pour assurer un scellage correct :
- quantité de matière suffisante
- coupage de fibres avec effet de ciseaux.

Elle pourra être de section sensiblement rectangulaire, triangulaire ou secteur circulaire.

La forme de réception du jonc sera choisi pour assurer un moulage du jonc lors du scellage dans une cavité et une délimitation de la zone de scellage.

Le lieu du jonc sera choisi pour assurer un endroit le moins sujet aux salissures, un endroit permettant de résister aux pressions internes, un endroit permettant une fermeture de la tranche du récipient, notamment sur la face supérieure ou inférieure du rebord du récipient.

Le procédé selon l'invention offre les possibilités suivantes :
- un plus grand choix de matières thermosoudables (la matière ne devant pas assurer le critère de coextrusion)
- un plus grand choix du positionnement du jonc
- un plus grand choix de la forme du jonc
- un plus grand choix du volume de matière constituant le jonc (qui est de toutes façons inférieure à la quantité de matière utilisée dans une couche selon EP-A-0 262 652); et
- un plus grand choix dans la réalisation des récipients ayant plusieurs compartiments ou alvéoles (matière et forme du jonc pouvant être spécifique à chaque alvéole).

La description suivante en regard des dessins annexés illustre l'invention. Sur ces dessins :
- la Fig. 1 est une vue schématique partielle en coupe d'une installation de thermoformage de barquettes, modifiée selon l'invention,
- les Figs 2 à 4 sont des représentations schématiques de trois exemples de scellage et d'ouverture d'un récipient obtenu selon l'invention.

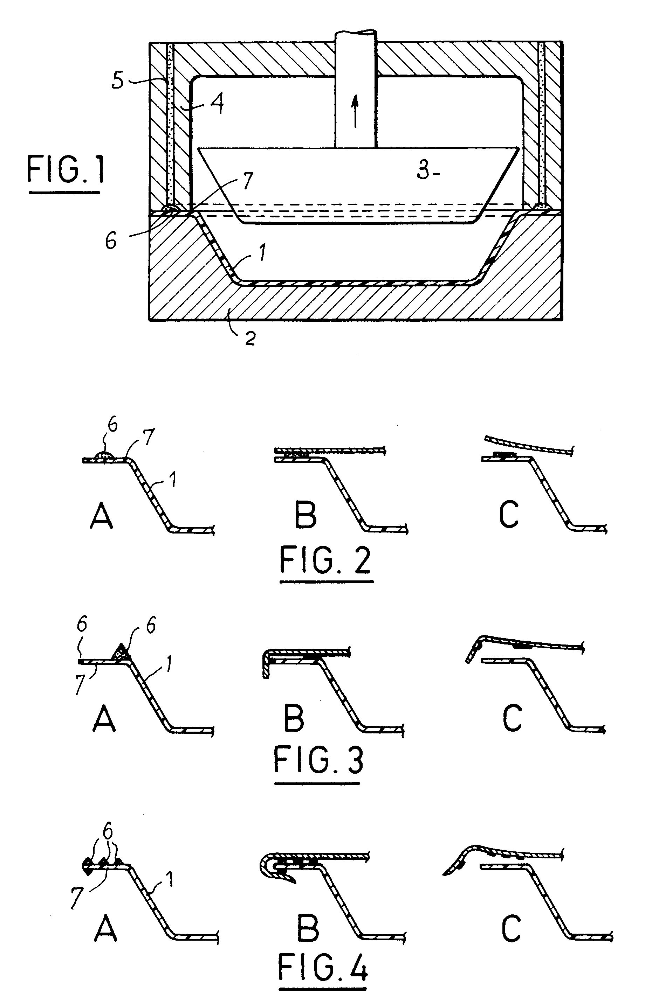

Sur la Fig. 1, un récipient 1 tel qu'une barquette pour aliments stérilisables est thermoformé à partir d'une feuille multicouches (PP/adhésif/EVOH/adhésif/PP de 1,2 mm d'épaisseur), au moyen d'un moule de thermoformage en reprise comportant notamment un moule 2, un emboutisseur 3 et un serre-flancs 4. Le serre-flancs 4 est muni d'un conduit 5 d'apport d'une matière thermosoudable (Bynel^{R} de la société Dupont de Nemours) injectée sous forme d'un jonc sur le rebord 7 du récipient 1 thermoformé. Ce jonc 6, de section sensiblement annulaire servira de moyen de scellage du récipient 1 après son remplissage par un produit alimentaire ou biologique et son recouvrement, sous pression et à chaud, par une feuille en PET/aluminium/laque servant d'opercule. L'ouverture de ce récipient par arrachement de l'opercule est facile, même après des traitements tels que stérilisation d'une heure à 121°C et choc thermique de -20° et + 40°C.

Sur les Figs 2 à 4 on peut voir trois exemples de réalisation d'un scellage (schéma B), après l'étape de dépôt d'un jonc 6 (schéma A) sur le rebord 7 d'un récipient 1, puis son ouverture (schéma C).

Le jonc 6 de matière thermosoudable peut avoir un profil sensiblement en secteur circulaire sur la Fig. 2A, sensiblement triangulaire sur les Figs. 3A et 4A ou sensiblement rectangulaire pour le dépôt latéral sur la Fig. 3A. Selon l'invention on peut effectuer une ligne, deux lignes ou plusieurs, par exemple 4 lignes de dépôt de matière thermosoudable (respectivement Figs 2, 3 et 4) sur un endroit quelconque du rebord. Les Figs 2B, 3B et 4B représentent les scellages obtenus respectivement avec les dépôts de matière précédentes, le bord de l'opercule étant soudé contre le rebord du récipient au moyen de cette matière. Les Figs. 2C, 3C et 4C montrent l'ouverture du récipient qui s'effectue facilement par arrachement de l'opercule, la matière du jonc pouvant être choisi pour rester sur le récipient (2C) ou l'opercule (3C et 4C).

L'homme du métier comprendra aisément que le procédé selon l'invention peut être mis en oeuvre avec un corps de récipient réalisé, non à partir d'une feuille en matière plastique mais d'un film multicouches comportant une couche extérieure en matière plastique qui lors du formage du corps du récipient constitue la face sur laquelle est simultanément injecté le jonc.

## Revendications

1. Procédé de fabrication d'un récipient comportant un corps possédant une ouverture, un cordon (6) de matière thermosoudable agencé à proximité de l'ouverture et un opercule scellé sur le cordon, caractérisé en ce que le cordon thermosoudable (6) est injecté à proximité de l'ouverture lors de la réalisation du corps du récipient (1) ou lors de l'opération de scellage de l'opercule.

2. Procédé selon la revendication 1, caractérisé en ce que la matière thermosoudable est injectée suivant une ou plusieurs lignes continues et fermées faisant le tour du récipient.

3. Procédé selon la revendication 1 ou la revendication 2, caractérisé en ce que la matière thermosoudable est injectée sur le rebord du récipient.

## Patentansprüche

1. Verfahren für die Herstellung eines Behälters mit einem Körper, welcher eine Öffnung aufweist, sowie einem Wulst (6) aus warmverformbarem Material, der an der Öffnung aufgetragen ist, und einem an diesem Wulst verschweißten Verschlußdeckel,
**dadurch gekennzeichnet, daß** der warmverformte Verbindungswulst (6) in der Nähe der Öffnung gleichzeitig mit der Herstellung des Behälterkörpers (1) oder mit der Verschweißung des Verschlußdeckels aufgespritzt wird.

2. Verfahren nach Anspruch 1,
**dadurch gekennzeichnet, daß** das warmverformbare Material in einem oder mehreren kontinuierlichen geschlossenen Streifen um den Behälter aufgespritzt wird.

3. Verfahren nach einem der Ansprüche 1 oder 2, **dadurch gekennzeichnet, daß** das warmverformbare Material auf den Rand des Behälters aufgespritzt wird.

## Claims

1. Method for manufacturing a container comprising a body possessing an opening, a bead (6) of heat-weldable material arranged in proximity to the opening, and a film sealed over the bead, characterised in that the heat-weldable bead (6) is injected in proximity to the opening during the formation of the body of the container (1) or during the operation of sealing the film.

2. Method according to Claim 1, characterised in that the heat-weldable material is injected along one or more continuous enclosed lines which run around the container.

3. Method according to Claim 1 or Claim 2, characterised in that the heat-weldable material is injected onto the rim of the container.
